# EUROPEAN PATENT APPLICATION

(11) **EP 4 597 832 A1**
(43) Date of publication of application: **06.08.2025**
(21) Application number: 23869716.3
(22) Date of filing: 08.06.2023
(51) Int. Cl.: H02S 20/00, H02S 20/32, H02S 20/10, H02S 20/30

(54) **SUPPORTING ASSEMBLIES AND PHOTOVOLTAIC TRACKING BRACKET**

(30) Priority: 28.09.2022 CN 202222578534 U
(71) Applicant: Mokun Renewable Technology Co., Ltd., Shanghai 201112 (CN)
(72) Inventor: GUO, Jiabao, Shanghai 201112 (CN); LIU, Xiao, Shanghai 201112 (CN)
(74) Representative: Grünecker Patent- und Rechtsanwälte PartG mbB
(86) International application number: PCT/CN2023/099190
(87) International publication number: WO 2024/066465

(57) **Abstract**

Provided are a supporting assembly and a photovoltaic tracking bracket, which relate to the technical field of photovoltaic power generation systems. The supporting assembly comprises a balanced supporting structure, an upper-end stand column and a lower-end stand column. The balanced supporting structure includes a bearing pedestal and is used for supporting a main beam of the photovoltaic tracking bracket. The upper-end stand column and the lower-end stand column are connected to each other, and the upper-end stand column is connected to the bearing pedestal. By means of setting a multi-section connection mode, at least one of a height direction, a south-north inclination angle and a vertical mounting angle of the bearing pedestal is adjustable, thereby meeting the mounting requirements of the balanced supporting structure, ensuring that the main beam is accurately supported and mounted by means of the balanced supporting structure, and ensuring flexible rotation after mounting.

## Description

### Technical Field

The present disclosure relates to the technical field of photovoltaic power generation systems, and in particular to a supporting assembly and a photovoltaic tracking bracket.

### Background Art

In photovoltaic power generation systems, a horizontal single-axis tracking bracket is one of the commonly used forms of photovoltaic brackets. The bracket can track changes in azimuth angles of the sun, so that a light receiving surface of an assembly can follow the orientation of the sun in real time during the daytime, enabling the light receiving surface of the assembly to receive solar radiation to the greatest extent, and thus increasing power generation. Generally, the horizontal single-axis tracking bracket has a structural form in which a full-length main beam is supported by a plurality of stand columns, and a photovoltaic assembly is mounted above the main beam and rotates about the center of the main beam as the axis. In this structural form, since the photovoltaic assembly is mounted above the main beam, a large eccentric bending moment is generated when the photovoltaic assembly rotates about the center of the main beam as the axis, which is unfavorable for the drive of the tracking bracket.

Therefore, in the design of the tracking bracket, when the axis of rotation is set at a certain position between the main beam and the assembly and coincides with the center of gravity of a rotation part of the tracking bracket, the dynamic performance of the tracking bracket will be greatly improved, making the tracking drive easy and flexible. Based on the above theory, a balanced supporting structure is designed. However, this balanced supporting method has high requirements for mounting accuracy of a supporting bearing, and the photovoltaic tracking bracket using the above balanced supporting structure is prone to the problem of rotational jamming.

### Summary

An objective of the present disclosure includes providing a supporting assembly, which can ensure flexible rotation after mounting and prevent jamming while realizing a balanced support.

The objective of the present disclosure further includes providing a photovoltaic tracking bracket, which can ensure flexible rotation after mounting and prevent jamming while realizing a balanced support.

Embodiments of the present disclosure may be implemented in the following ways.

A supporting assembly includes a balanced supporting structure, the balanced supporting structure being used for supporting a main beam of the photovoltaic tracking bracket and including a bearing pedestal; and the supporting assembly further includes an upper-end stand column and a lower-end stand column, the upper-end stand column being connected to the bearing pedestal, and the lower-end stand column having an upper end connected to the upper-end stand column, and a lower end connected to a pile foundation,
where at least one of a height, a south-north inclination angle and a vertical mounting angle of the bearing pedestal is adjustable.

Optionally, the bearing pedestal is rotatably connected to the upper-end stand column so as to adjust the south-north inclination angle of the bearing pedestal.

Optionally, the bearing pedestal is connected to the upper-end stand column by means of a first connecting bolt, and the bearing pedestal is rotatable about an axis of the first connecting bolt relative to the upper-end stand column.

Optionally, a position where the upper-end stand column is connected to the lower-end stand column is adjustable so as to adjust the height of the bearing pedestal.

Optionally, the supporting assembly further includes a second connecting bolt that connects the upper-end stand column to the lower-end stand column; and the upper-end stand column and/or the lower-end stand column have/has a plurality of connecting holes at different heights, and the second connecting bolt is selectively fitted with the connecting holes.

Optionally, the plurality of connecting holes intersect with each other sequentially to form a string of holes.

Optionally, the upper-end stand column has a first vertical plate, the lower-end stand column has a second vertical plate, the supporting assembly further includes a spacer disposed between the first vertical plate and the second vertical plate, and the spacer is located on a side of the first vertical plate in a width direction so as to adjust an included angle between the first vertical plate and the second vertical plate, thereby adjusting the vertical mounting angle of the bearing pedestal.

Optionally, the upper-end stand column is of a U-shaped structure, a C-shaped structure, or a flat-plate structure; and/or
the lower-end stand column is of an H-shaped structure, a C-shaped structure, or a square-tube structure.

Optionally, the balanced supporting structure further includes a bearing arc, a roller, and a transverse horizontal shaft, where the bearing arc has an arc-shaped guide rail, the roller is connected to the bearing pedestal by means of the transverse horizontal shaft, and the roller is in rolling fit with the guide rail; and the guide rail has a recessed web, the transverse horizontal shaft has a stepped portion protruding from an end face of the roller, and the stepped portion fits with a recessed part of the web so as to restrict a position of the roller in the guide rail.

A photovoltaic tracking bracket includes a main beam and a plurality of supporting assemblies as described above, a plurality of balanced supporting structures being mounted on the main beam spaced apart from each other in a length direction of the main beam so as to support the main beam.

The supporting assembly and the photovoltaic tracking bracket according to the embodiments of the present disclosure include the following beneficial effects.

An embodiment of the present disclosure provides a supporting assembly, including a balanced supporting structure, an upper-end stand column and a lower-end stand column, where the balanced supporting structure includes a bearing pedestal and is used for supporting a main beam of the photovoltaic tracking bracket. The upper-end stand column and the lower-end stand column are connected to each other, and the upper-end stand column is connected to the bearing pedestal. By means of setting a multi-section connection mode, at least one of a height direction, a south-north inclination angle and a vertical mounting angle of the bearing pedestal is adjustable, thereby meeting the mounting requirements of the balanced supporting structure, ensuring that the main beam is accurately supported and mounted by means of the balanced supporting structure, and ensuring flexible rotation after mounting.

An embodiment of the present disclosure further provides a photovoltaic tracking bracket, including the supporting assembly as described above. Accordingly, the photovoltaic tracking bracket has the beneficial effects of accurate mounting and flexible rotation.

### Brief Description of the Drawings

After reading the detail description of the embodiments of the present disclosure in conjunction with the following drawings, the above-mentioned features and advantages of the present disclosure can be better understood. In the drawings, the components are not necessarily drawn to scale, and the components with similar related characteristics or features may have the same or similar reference signs.
Fig. 1 shows a schematic diagram of a partial structure of a photovoltaic tracking bracket according to an aspect of the present disclosure from a perspective;
Fig. 2 shows a schematic diagram of a partial structure of a photovoltaic tracking bracket according to an aspect of the present disclosure from another perspective;
Fig. 3 shows a schematic diagram of a structure of a bearing pedestal of a supporting assembly according to an aspect of the present disclosure;
Fig. 4 shows a schematic diagram of a structure of a bearing arc of a supporting assembly according to an aspect of the present disclosure;
Fig. 5 shows a schematic diagram of a structure of a pressing plate of a supporting assembly according to an aspect of the present disclosure;
Fig. 6 shows a structure of fitting of a bearing pedestal, a bearing arc, and rollers of a supporting assembly according to an aspect of the present disclosure;
Fig. 7 shows a schematic diagram of a structure of an upper-end stand column of a supporting assembly according to an aspect of the present disclosure;
Fig. 8 shows a schematic diagram of a structure of mounting of an upper-end stand column and a balanced supporting structure of a supporting assembly according to an aspect of the present disclosure;
Fig. 9 shows a schematic diagram of a structure of a lower-end stand column of a supporting assembly according to an aspect of the present disclosure; and
Fig. 10 shows a schematic cross-sectional view of a structure of fitting of an end stand column with a lower-end stand column of a supporting assembly according to an aspect of the present disclosure.

### List of reference signs:

10 - photovoltaic tracking bracket; 100 - supporting assembly; 110 - balanced supporting structure; 111 - bearing pedestal; 1111 - connecting lug; 1112 - first mounting hole; 1113 - mounting lug; 1114 - transverse hole; 112 - bearing arc; 1121 - guide rail; 1122 - recessed structure; 1123 - recess; 1124 - limit hole; 113 - pressing plate; 114 - transverse horizontal shaft; 1141 - stepped portion; 115 - roller; 120 - upper-end stand column; 121 - second mounting hole; 122 - first vertical plate; 123 - first connecting hole; 130 - lower-end stand column; 131 - second vertical plate; 132 - second connecting hole; 141 - first connecting bolt; 142 - second connecting bolt; 150 - spacer; 200 - main beam.

### Detailed Description of Embodiments

The present disclosure is described below in detail with reference to the accompanying drawings and particular embodiments. It is noted that the aspects described with reference to the accompanying drawings and particular embodiments are merely exemplary, and should not be construed as any limitation on the scope of protection of the present disclosure.

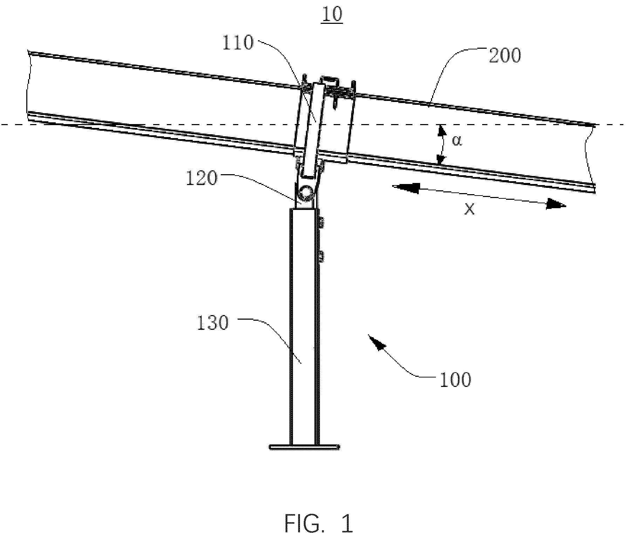

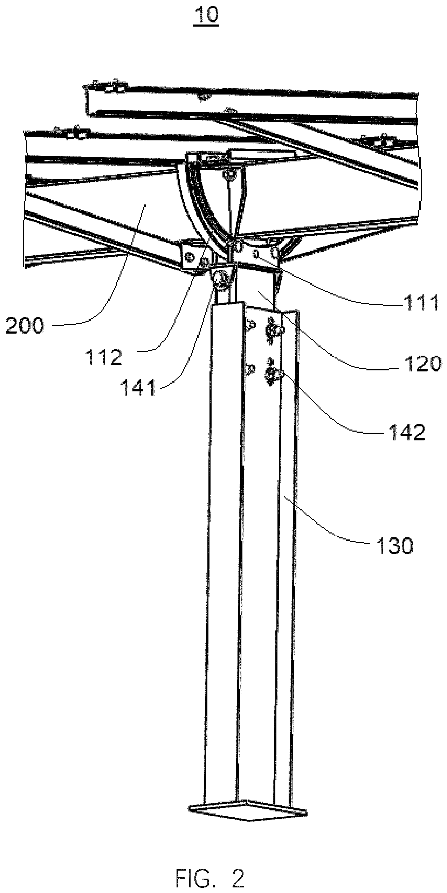

Fig. 1 is a schematic diagram of a partial structure of a photovoltaic tracking bracket 10 according to an embodiment from a perspective. Fig. 2 is a schematic diagram of a partial structure of the photovoltaic tracking bracket 10 according to this embodiment from another perspective. Referring to Figs. 1 and 2, this embodiment provides a supporting assembly 100 and further provides a photovoltaic tracking bracket 10. The photovoltaic tracking bracket 10 includes a main beam 200 and a plurality of supporting assemblies 100. The plurality of supporting assemblies 100 are arranged spaced apart from each other in a length direction (an X-direction in Fig. 1) of the main beam 200, such that the main beam 200 is supported by means of the co-action of the plurality of supporting assemblies 100.

Each of the supporting assemblies 100 includes a balanced supporting structure 110, an upper-end stand column 120, and a lower-end stand column 130. The balanced supporting structure 110 is connected to the lower-end stand column 130 via the upper-end stand column 120, and the lower-end stand column 130 is vertically fixed to a pile foundation.

An axis of rotation of the balanced supporting structure 110 is arranged between the main beam 200 and a photovoltaic assembly (not shown in the figures), that is, the main beam 200 is located below the axis of rotation of the balanced supporting structure 110, and the axis coincides with a center of gravity of a rotation part of a photovoltaic power generation system. Specifically, a height of the axis can be adjusted by selecting a bearing arc 112 of a different radius, thereby achieving the coincidence of the axis and the center of gravity. It should be noted that the "rotation part of the photovoltaic power generation system" refers to a structure composed of a rotation part of the balanced supporting structure 110, the main beam 200 and the photovoltaic assembly.

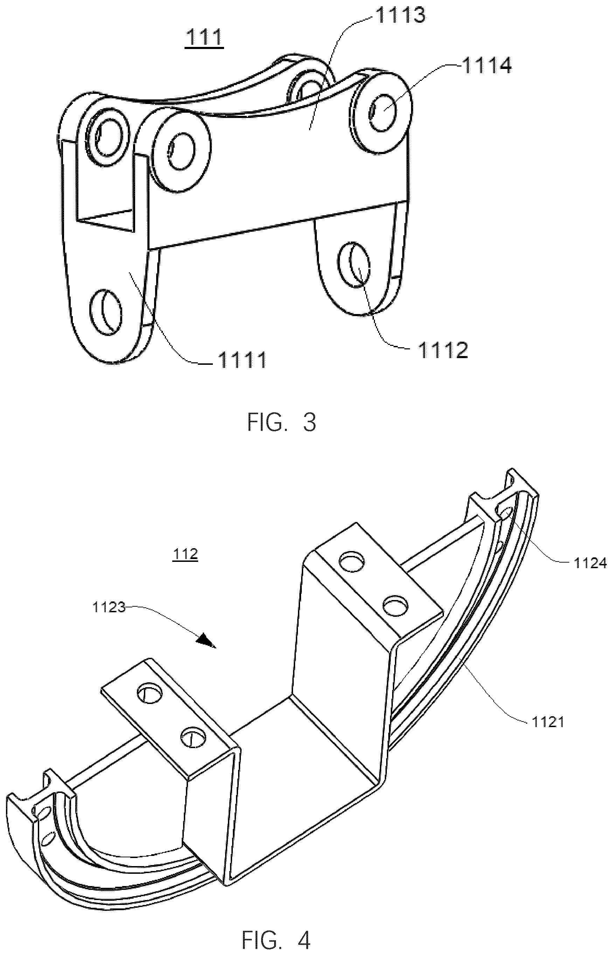

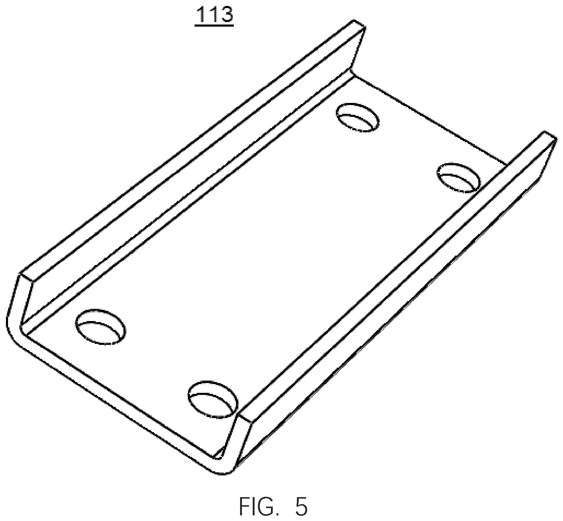

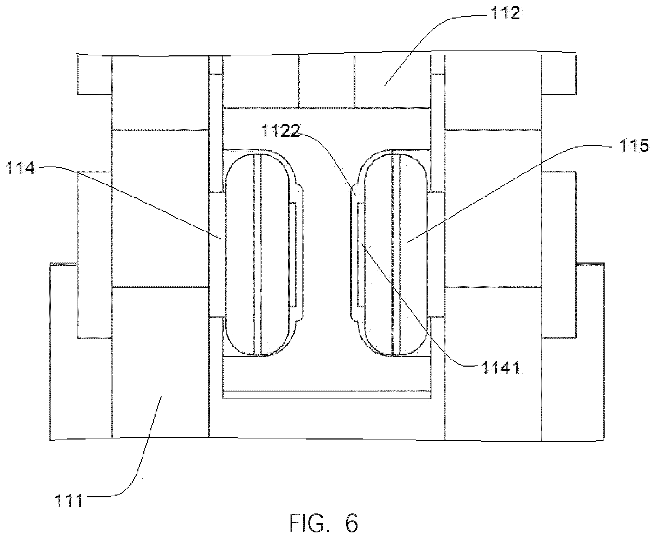

Optionally, the balanced supporting structure 110 includes a bearing pedestal 111 (as shown in Fig. 3), a bearing arc 112 (as shown in Fig. 4), rollers 115 (as shown in Fig. 6), and a pressing plate 113 (as shown in Fig. 5). The bearing arc 112 is substantially semicircular, and is provided with guide rails 1121 distributed symmetrically at an outer edge thereof. Each of the guide rails 1121 has a U-shaped cross-section, and the guide rail 1121 extends along the outer edge of the bearing arc 112 in a semicircular shape. Fig. 6 shows a structure of fitting of the bearing pedestal 111, the bearing arc 112, and the rollers 115. As shown in Fig. 6, each of the rollers 115 is rotatably connected to the bearing pedestal 111, and the roller 115 is mounted in the guide rail 1121 and is in a rolling fit with the guide rail 1121 to realize rotation of the bearing arc 112 relative to the bearing pedestal 111. The axis of rotation is the axis of the guide rail 1121, i.e., the axis of the semicircular bearing arc 112.

Further, an outer ring of a longitudinal cross-section of the roller 115 is semicircular, and accordingly, the guide rail 1121 has a chamfer adapted to the profile of the roller 115, helping to prevent rotational jamming caused by mounting and manufacturing precision errors when the bearing arc 112 fits with the bearing pedestal 111. Moreover, a web of the U-shaped guide rail 1121 is recessed in the middle, and a transverse horizontal shaft 114 for receiving and mounting the roller 115 has a stepped portion 1141 protruding from an end face of the roller 115. The stepped portion 1141 fits with a recessed structure 1112 at the web of the guide rail 1121 to restrict a radial displacement of the bearing arc 112 when fitting with the bearing pedestal 111 and prevent the transverse horizontal shaft 114 from coming into contact with the web of the guide rail 1121. In addition, by the fitting of the stepped portion 1141 with the web of the guide rail 1121, a position of the roller 115 in the guide rail 1121 can be limited, so that the roller 115 is in line contact with the guide rail 1121, further ensuring flexible rotation.

A pair of mounting lugs 1113 are provided at an upper end of the bearing pedestal 111. Two transverse holes 1114 are provided in each of the mounting lugs 1113. The transverse horizontal shaft 114 is mounted in the transverse hole 1114. In this way, four rollers 115 are mounted by means of the four transverse horizontal shafts 114.

Further, limit holes 1124 are provided at two ends of the guide rail 1121 in an extension direction, and after the roller 115 is introduced into the guide rail 1121, limit bolts are mounted in the limit holes 1124, respectively, thereby preventing the roller 115 from escaping from an opening at either end of the guide rail 1121 when the roller 115 rolls relative to the guide rail 1121.

A U-shaped recess 1123 is provided in the center of the bearing arc 112, and the recess 1123 forms an opening at a radial dividing surface of the bearing arc 112. A pressing plate 113 is mounted at the opening of the recess 1123 to close the opening, so that a through-hole that is closed on four circumferential sides and open at two axial ends is formed, and the through-hole is used for mounting the main beam 200. In this way, when the bearing arc 112 rotates relative to the bearing pedestal 111, the main beam 200 is driven to rotate relative to the bearing pedestal 111. The position of the bearing pedestal 111 remains unchanged during power generation of the photovoltaic assembly. The rotation of the bearing arc 112 realizes deflection of the photovoltaic assembly on the main beam 200 in an east-west direction, thereby tracking changes in azimuth angles of the sun. Specifically, the pressing plate 113 is detachably fixed to the bearing arc 112 by means of bolts.

In this embodiment, a height, a south-north inclination angle, and a vertical mounting angle of the bearing pedestal 111 may all be adjusted to meet various mounting requirements of the balanced supporting structure 110. Moreover, the photovoltaic tracking bracket 10 can be mounted adaptively in the south-north gentle slope terrain by means of multi-dimensional adjustment. It should be understood that in other embodiments, only some of the height, the south-north inclination angle and the vertical mounting angle of the bearing pedestal 111 may also be adjusted, so as to meet one or more mounting requirements of the balanced supporting structure 110.

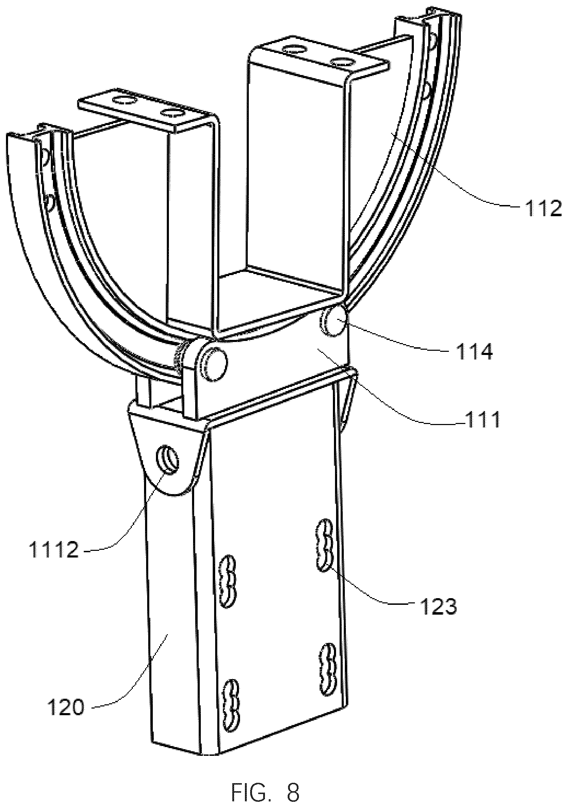

Optionally, the bearing pedestal 111 is rotatably connected to the upper-end stand column 120 so as to adjust the south-north inclination angle of the bearing pedestal 111. Since the rotation of the bearing arc 112 relative to the bearing pedestal 111 is used to position the photovoltaic assembly in the east-west direction for adjustment by tracking the solar angle, when the bearing pedestal 111 is arranged vertically (e.g., in the position shown in Fig. 8), the direction of the axis of rotation (as shown by the dotted line in Fig. 1) of the bearing arc 112 may be regarded generally as a south-north direction, and the south-north inclination angle of the bearing pedestal 111 may be regarded as an angle α by which the axis of rotation of the bearing arc 112 rotates relative to the south-north direction. In other embodiments, the south-north inclination angle of the bearing pedestal 111 may also be adjusted in other ways, for example, the upper-end stand column 120 is rotatably connected to the lower-end stand column 130.

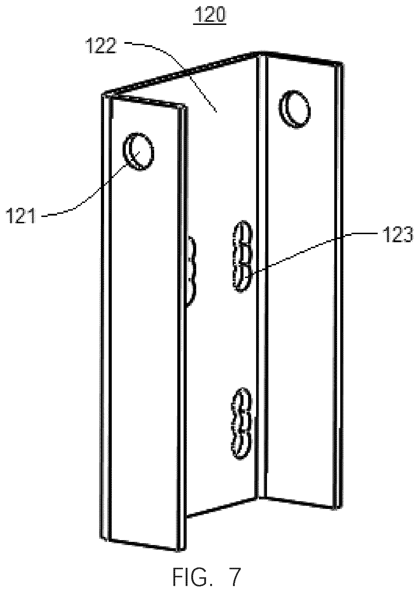

Fig. 7 is a schematic diagram of a structure of the upper-end stand column 120 according to this embodiment, and Fig. 8 is a schematic diagram of a structure of mounting of the upper-end stand column 120 and the balanced supporting structure 110 according to this embodiment. Referring to Figs. 1 to 8, specifically, the bearing pedestal 111 has two connecting lugs 1111 at a lower end thereof, the two connecting lugs 1111 are spaced apart from each other in the east-west direction, and a mounting hole is provided in each of the connecting lugs 1111, the mounting hole being a first mounting hole 1112, the two first mounting holes 1112 being arranged coaxially, and axes of the first mounting holes 1112 being perpendicular to the axis of rotation of the bearing arc 112. Correspondingly, the upper-end stand column 120 has two second mounting holes 121 arranged opposite each other, and the two second mounting holes 121 are arranged coaxially. During mounting, the axis of the first mounting hole 1112 coincides with the axis of the second mounting hole 121, and a first connecting bolt 141 is used to pass through both the first mounting hole 1112 and the second mounting hole 121 for connection. Before the first connecting bolt 141 is locked, the bearing pedestal 111 can rotate about the axis of the first connecting bolt 141 relative to the upper-end stand column 120 for angle adjustment until a desired angle is reached. After the first connecting bolt 141 is locked, the bearing pedestal 111 is fixed at the desired angle relative to the upper-end stand column 120 to ensure stable support for the balanced supporting structure 110. It should be understood that in other embodiments, other lockable rotating structure may be used to realize the rotatable connection between the bearing pedestal 111 and the upper-end stand column 120.

As shown in Fig. 7, the upper-end stand column 120 in this embodiment is of a U-shaped structure, that is, the cross section of the upper-end stand column 120 is U-shaped. In other embodiments, the upper-end stand column 120 may also be configured to be of a C-shaped structure or a flat-plate structure.

Optionally, a position where the upper-end stand column 120 is connected to the lower-end stand column 130 is adjustable so as to adjust the height of the bearing pedestal 111. In other embodiments, when the upper-end stand column 120 is rotatably connected to the lower-end stand column 130 to adjust the south-north inclination angle of the bearing pedestal 111, the height of the bearing pedestal 111 may be adjusted by adjusting the position where the bearing pedestal 111 is connected to the upper-end stand column 120.

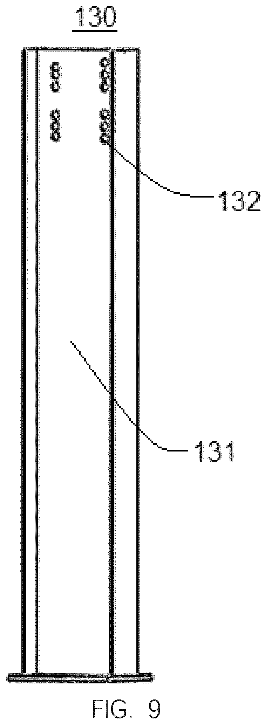

Fig. 9 is a schematic diagram of a structure of the lower-end stand column 130 according to this embodiment. Referring to Figs. 1 to 9, specifically, the upper-end stand column 120 is provided with a plurality of connecting holes at different heights, which are first connecting holes 123, and the lower-end stand column 130 is also provided with a plurality of connecting holes at different heights, which are second connecting holes 132. The supporting assembly 100 further includes a second connecting bolt 142 that connects the upper-end stand column 120 to the lower-end stand column 130. The second connecting bolt 142 is selectively fitted with one first connecting hole 123 and one second connecting hole 132, thereby adjusting the connection position. Apparently, when only one of the upper-end stand column 120 and the lower-end stand column 130 is provided with a plurality of connecting holes at different heights, by selectively fitting the second connecting bolt 142 with the connecting holes, the height of the bearing pedestal 111 can also be adjusted.

Further, the upper-end stand column 120 has a plurality of groups of first connecting holes 123, and each group of first connecting holes 123 has a plurality of first connecting holes 123 at different heights; the lower-end stand column 130 has a plurality of groups of second connecting holes 132, and each group of second connecting holes 132 has a plurality of second connecting holes 132 at different heights; and the plurality of groups of first connecting holes 123 arranged corresponding to the plurality of groups of second connecting holes 132 on a one-to-one basis. Accordingly, a plurality of second connecting bolts 142 are provided. In this embodiment, four second connecting bolts 142 are provided, the upper-end stand column 120 has four groups of first connecting holes 123, and the lower-end stand column 130 has four groups of first connecting holes 123.

Further, the plurality of connecting holes at different heights intersect with each other sequentially to form a string of holes, that is, each group of first connecting holes 123 and each group of second connecting holes 132 may each be regarded as a string of holes. Accordingly, in this embodiment, the upper-end stand column 120 has four strings of holes, and the lower-end stand column 130 also has four strings of holes. Apparently, in other embodiments, the plurality of connecting holes at different heights may also be spaced apart from each other.

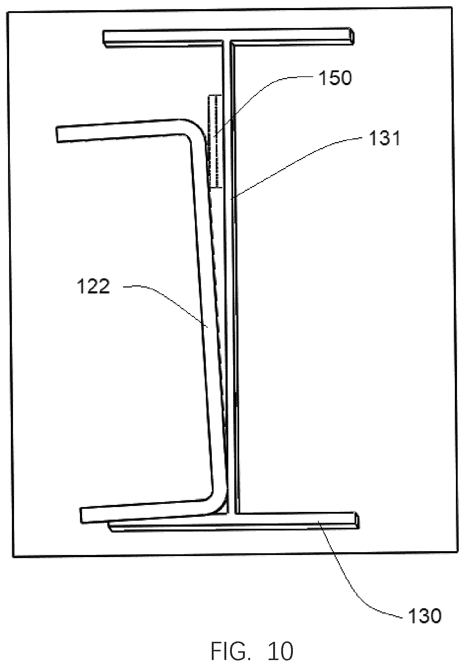

Fig. 10 is a schematic cross-sectional view of a structure of fitting of the upper-end stand column 120 with the lower-end stand column 130 according to this embodiment. Referring to Figs. 1 to 10, in this embodiment, the upper-end stand column 120 has a first vertical plate 122, the lower-end stand column 130 has a second vertical plate 131, the supporting assembly 100 further includes a spacer 150 disposed between the first vertical plate 122 and the second vertical plate 131, and the spacer 150 is arranged on a side of the first vertical plate 122 in a width direction, so that the first vertical plate 122 and the second vertical plate 131 are arranged at an angle. Moreover, the angle between the first vertical plate 122 and the second vertical plate 131 can be adjusted by adjusting the position, thickness, and number of the spacer 150, thereby adjusting the vertical mounting angle of the bearing pedestal 111 and ensuring that the axis of the main beam 200 is perpendicular to the axis of rotation of the bearing pedestal 111, in other words, ensuring that the axis of the main beam 200 is coaxial with the axis of rotation of the bearing arc 112, and thus avoiding torsional jamming. That is, in this embodiment, the vertical mounting angle of the bearing pedestal 111 is an included angle between a vertical plane where the axis of rotation of the bearing pedestal 111 is located and the second vertical plate 131.

Specifically, the first connecting holes 123 are provided in the first vertical plate 122 of the upper-end stand column 120, the second connecting holes 132 are provided in the second vertical plate 131 of the lower-end stand column 130, and the axis of the first connecting hole 123 is perpendicular to the axis of the second mounting hole 121, that is, the axis of the first connecting bolt 141 is perpendicular to the axis of the second connecting bolt 142. The four groups of first connecting holes 123 are arranged in two vertical columns, accordingly, the four groups of second connecting holes 132 are arranged in two vertical columns, and the spacer 150 is disposed between one column of the first connecting holes 123 and one column of the second connecting holes 132 corresponding thereto as needed.

As shown in Fig. 10, the lower-end stand column 130 in this embodiment is of an H-shaped structure. In other embodiments, the lower-end stand column 130 may be of a C-shaped structure, or a square-tube structure, etc.

In the supporting assembly 100 and the photovoltaic tracking bracket 10 according to this embodiment, the height of the axis of rotation of the photovoltaic tracking bracket 10 can be adjusted by selecting a bearing arc 112 of a different radius, thereby truly realizing the coincidence of the center of gravity of the rotation part of the photovoltaic tracking bracket 10 with the axis, fundamentally eliminating the adverse effects of eccentric bending moment on the tracking rotation, and improving the tracking drive performance. Moreover, the bearing arc 112 is firmly and reliably connected to the bearing pedestal 111, and the guide rail 1121 provided at the outer peripheral edge of the bearing arc 112 is U-shaped, and upper and lower edges of the guide rail can bear a large limiting load. Moreover, the inwardly-overhanging transverse horizontal shafts 114 are used at an upper portion of the bearing pedestal 111, resulting in good rigidity, high load-bearing capacity, and the ability to withstand a strong impact load. In addition, the height, the south-north inclination angle, and the vertical mounting angle of the bearing pedestal 111 can all be adjusted, so that various mounting requirements of the balanced supporting structure 110 can be met to ensure that the main beam 200 is accurately supported and mounted and ensure the flexible rotation, and the adaptive mounting of the photovoltaic tracking bracket 10 in the south-north slope terrain can also be realized. After being mounted, the main beam 200 is parallel to the slope, thereby achieving strong terrain adaptability, meeting the mounting requirements in more different scenarios, and having a broader application space.

## Claims

1. A supporting assembly, comprising a balanced supporting structure, the balanced supporting structure being used for supporting a main beam of a photovoltaic tracking bracket and comprising a bearing pedestal, **characterized in that**
the supporting assembly further comprises an upper-end stand column and a lower-end stand column, the upper-end stand column being connected to the bearing pedestal, and the lower-end stand column having an upper end connected to the upper-end stand column, and a lower end connected to a pile foundation,
wherein at least one of a height, a south-north inclination angle and a vertical mounting angle of the bearing pedestal is adjustable.

2. The supporting assembly according to claim 1, **characterized in that** the bearing pedestal is rotatably connected to the upper-end stand column so as to adjust the south-north inclination angle of the bearing pedestal.

3. The supporting assembly according to claim 2, **characterized in that** the bearing pedestal is connected to the upper-end stand column by means of a first connecting bolt, and the bearing pedestal is rotatable about an axis of the first connecting bolt relative to the upper-end stand column.

4. The supporting assembly according to claim 1, **characterized in that** a position where the upper-end stand column is connected to the lower-end stand column is adjustable so as to adjust the height of the bearing pedestal.

5. The supporting assembly according to claim 4, **characterized in that** the supporting assembly further comprises a second connecting bolt that connects the upper-end stand column to the lower-end stand column; and the upper-end stand column and/or the lower-end stand column have/has a plurality of connecting holes at different heights, and the second connecting bolt is selectively fitted with the connecting holes.

6. The supporting assembly according to claim 5, **characterized in that** the plurality of connecting holes intersect with each other sequentially to form a string of holes.

7. The supporting assembly according to claim 1, **characterized in that** the upper-end stand column has a first vertical plate, the lower-end stand column has a second vertical plate, the supporting assembly further comprises a spacer disposed between the first vertical plate and the second vertical plate, and the spacer is located on a side of the first vertical plate in a width direction so as to adjust an included angle between the first vertical plate and the second vertical plate, thereby adjusting the vertical mounting angle of the bearing pedestal.

8. The supporting assembly according to claim 1, **characterized in that** the upper-end stand column is of a U-shaped structure, a C-shaped structure, or a flat-plate structure; and/or
the lower-end stand column is of an H-shaped structure, a C-shaped structure, or a square-tube structure.

9. The supporting assembly according to any one of claims 1 to 8, **characterized in that** the balanced supporting structure further comprises a bearing arc, a roller, and a transverse horizontal shaft, wherein the bearing arc has an arc-shaped guide rail, the roller is connected to the bearing pedestal by means of the transverse horizontal shaft, and the roller is in rolling fit with the guide rail; and the guide rail has a recessed web, the transverse horizontal shaft has a stepped portion protruding from an end face of the roller, and the stepped portion fits with a recessed part of the web so as to restrict a position of the roller in the guide rail.

10. A photovoltaic tracking bracket, **characterized in that** the photovoltaic tracking bracket comprises a main beam and a plurality of supporting assemblies according to any one of claims 1 to 9, a plurality of balanced supporting structures being mounted on the main beam spaced apart from each other in a length direction of the main beam so as to support the main beam.
